# EUROPÄISCHE PATENTANMELDUNG

(11) **EP 2 345 514 A2**
(43) Veröffentlichungstag der Anmeldung: **20.07.2011**
(21) Anmeldenummer: 11000102.1
(22) Anmeldetag: 07.01.2011
(51) Int. Cl.: B25J 9/16, G05B 19/042

(54) **Verfahren und Vorrichtung zum Kontrollieren einer Roboterapplikation**

(30) Priorität: 13.01.2010 DE 102010004477; 13.01.2010 DE 102010004476
(71) Anmelder: KUKA Laboratories GmbH, 86165 Augsburg (DE)
(72) Erfinder: Bongardt, Thomas, 86179 Augsburg (DE); Güngoer, Hüseyin, 86316 Frieberg (DE); Jacob, Dirk, 87616 Marktoberdorf (DE); Kohler, Thomas, 86368 Gersthofen (DE); Schlickenrieder, Klaus, 86497 Horgau (DE); Strobel, Joachim, 83624 Otterfing (DE); Sulski, Kasimier, 86343 Königsbrunn (DE)
(74) Vertreter: Schlotter, Alexander Carolus Paul

(57) **Zusammenfassung**

Ein erfindungsgemäßes Verfahren zum Kontrollieren einer Roboterapplikation umfasst die Schritte:
Konfigurieren der Roboterapplikation; und
Kontrollieren der Roboterapplikation mittels einer Kontrollschnittstelle (S1, S2, S3),
wobei die Kontrollschnittstelle automatisch auf Basis der Konfiguration (K) der Roboterapplikation generiert und/oder modifiziert wird.

## Beschreibung

Die vorliegende Erfindung betrifft ein Verfahren und eine Vorrichtung zum Kontrollieren einer Roboterapplikation mittels einer Kontrollschnittstelle.

Beispielsweise aus der EP 1 136 192 A2 ist es bekannt, eine Kontrollschnittstelle in Form einer graphischen Benutzerschnittstelle ("Graphical User Interface" GUI) zum Kontrollieren einer Roboterapplikation zu nutzen.

Bei der Konfiguration einer neuen Roboterapplikation oder einer Modifikation einer vorhandenen Konfiguration muss hierzu die Kontrollschnittstelle bisher jeweils, wie in der EP 1 136 192 A2 erläutert, neu generiert bzw. entsprechend modifiziert werden. Die EP 1 136 192 A2 schlägt hierzu kommerzieller Werkzeuge wie zum Beispiel Microsoft Visual Basic vor.

Dies ist jedoch nicht nur aufwändig und fehleranfällig, sondern setzt beim Anlagenprogrammierer neben der Kernkompetenz zur Konfiguration der Roboterapplikation selber auch entsprechende Programmierkenntnisse zur Generierung der Schnittstelle voraus.

Aufgabe der vorliegenden Erfindung ist es, das Kontrollieren einer Roboterapplikation mittels einer Kontrollschnittstelle zu verbessern.

Diese Aufgabe wird durch ein Verfahren mit den Merkmalen des Anspruchs 1 gelöst. Anspruch 6 stellt eine Vorrichtung, Anspruch 9 bzw. 10 ein Computerprogramm bzw. ein Computerprogrammprodukt, insbesondere ein Speichermedium oder einen Datenträger, zur Durchführung eines Verfahrens nach Anspruch 1 unter Schutz. Die Unteransprüche betreffen vorteilhafte Weiterbildungen.

Die Erfindung dient zum Kontrollieren einer Roboterapplikation mittels einer Kontrollschnittstelle. Dabei wird unter einer Roboterapplikation insbesondere ein System von einem oder mehreren Robotern, insbesondere Industrierobotern, Werkzeugen, insbesondere robotergeführten Werkzeugen, und/oder Maschinen, beispielsweise Transportvorrichtungen wie Förderern, Werkzeugmaschinen und dergleichen und/oder ein von einem solchen System ausgeführter Prozess verstanden. Insbesondere kann eine Roboterapplikation somit eine Anlage zur automatisierten Fertigung, Bearbeitung und/oder Montage, beispielsweise eine Roboterzelle zum Schweißen, Lackieren, Palletieren oder dergleichen sein bzw. umfassen.

Unter einem Kontrollieren einer Roboterapplikation wird dementsprechend insbesondere die Bedienung der Applikation bzw. von Applikationskomponenten wie insbesondere Robotern, beispielsweise die Eingabe von Befehlen bzw. die Programmierung wie etwa das Teachen, das (Wieder)Inbetriebnehmen, oder Stoppen, und/oder die Überwachung der Applikation bzw. von Applikationskomponente(n), beispielsweise von Prozessparametern oder dergleichen verstanden.

Die Roboterapplikation wird zunächst konfiguriert. Als Konfigurieren wird vorliegend insbesondere eine Auswahl von Applikationskomponenten, beispielsweise Robotern, Kinematiken, Antrieben, Steuerungen, Werkzeugen, ihre Anordnung bzw. Ausrichtung, beispielsweise von kooperierenden Robotern relativ zueinander oder eines Roboterwerkzeuges relativ zu einem Werkstück, ihre Spezifikation, zum Beispiel die Vorgabe von Achsbereichen oder Maximalkräften und -momenten, und/oder die Planung von Prozessen der Applikation, beispielsweise Bewegungen von Robotern und/oder Transporteinrichtungen, Aktionen von Werkzeugen wie der Arbeitsmittelausgabe etwa eines Klebe- oder Lackierkopfes oder des Schweißstromes eines Schweißkopfes und dergleichen bezeichnet. Insbesondere kann ein Konfigurieren im Sinne der vorliegenden Erfindung damit die Planung und/oder Programmierung einer Anlage zur automatisierten Fertigung, Bearbeitung und/oder Montage umfassen, eine Konfiguration entsprechend insbesondere Aufbau, Spezifikation und/oder Arbeitsablauf einer Roboterapplikation.

Erfindungsgemäß wird eine Kontrollschnittstelle nun automatisch auf Basis dieser Konfiguration der Roboterapplikation generiert. Zusätzlich oder alternativ kann die Kontrollschnittstelle auf Basis der Konfiguration automatisch modifiziert werden, beispielsweise, indem eine vorhandene Kontrollschnittstelle, insbesondere eine Standardkontrollschnittstelle, an eine neu erstellte Konfiguration oder indem eine Kontrollschnittstelle für eine vorhergehende Konfiguration an eine geänderte Konfiguration angepasst wird.

Die automatische Generierung kann insbesondere auf Basis von Komponenten der Roboterapplikation, beispielsweise verwendeter Roboter, in der Roboterapplikation gehandhabter Werkstücke, beispielsweise deren CAD-Daten, und/oder des auszuführenden Prozesses, beispielsweise einzelner Prozessaufgaben, -schritte und/oder -stationen, erfolgen. So kann beispielsweise, wenn der Roboterapplikation eine Komponente wie ein (weiterer) Roboter hinzugefügt wird, der Kontrollschnittstelle automatisch eine entsprechende Kontrollapplikation, insbesondere Ein- und/oder Ausgabemöglichkeiten für diese Komponente hinzugefügt werden. Wird zum Beispiel ein weiteres Werkzeug oder ein weiterer Prozess(schritt) hinzugefügt, kann die Kontrollschnittstelle automatisch um entsprechende Ein- und/oder Ausgabemöglichkeiten für Werkzeug- bzw. Prozessparameter erweitert werden. Entsprechend kann bei Austausch oder Entfernen einer Komponente der Roboterapplikation die Kontrollschnittstelle entsprechend modifiziert, zum Beispiel zugehörigen Ein- und/oder Ausgabemöglichkeiten verändert oder entfernt werden.

Vorzugsweise ist die solcherart automatisch generierte Kontrollschnittstelle durch den Benutzer noch veränderbar. Beispielsweise können automatisch zunächst ein Minimum oder Maximum an Ein- und/oder Ausgabemöglichkeiten für eine oder mehrere Komponenten der Roboterapplikation vorgesehen werden, so dass der Benutzer bei Bedarf diesen weitere hinzufügen bzw. nicht benötigte entfernen kann.

Indem erfindungsgemäß auf Basis der Konfiguration automatisch eine Kontrollschnittstelle generiert bzw. modifiziert wird, wird der Aufwand hierfür für den Anlagenprogrammierer, der die Roboterapplikation plant, verringert und zugleich die Fehlersicherheit verbessert, da einerseits der Anlagenprogrammierer, dessen Kernkompetenz in der Planung der Applikation liegt, die Kontrollschnittstelle nicht selbst generieren bzw. modifizieren muss bzw. dies in einfacherer Weise tun kann, indem er von der automatisch generierten bzw. modifizierten ausgeht. Andererseits kann sichergestellt werden, dass die Kontrollschnittstelle an die konkrete Roboterapplikation angepasst ist und beispielsweise stets alle notwendigen Ein- und/oder Ausgabemöglichkeiten zum Kontrollieren der Applikation aufweist.

In einer bevorzugten Ausführung ist die Kontrollschnittstelle portabel ausgebildet und umfasst eine visuelle Ein- und/oder Ausgabeeinrichtung. Insbesondere kann eine Kontrollschnittstelle als Notebook, Handheld oder Kontroll-Panel ausgebildet sein und einen Bild- oder Touchscreen aufweisen, der ein graphikbasiertes Kontrollieren der Roboterapplikation, insbesondere mittels einer graphischen Benutzerschnittstelle (GUI) ermöglicht.

Vorzugsweise werden Konfiguration und Kontrollschnittstelle konsistent gehalten, beispielsweise gespiegelt. Beispielsweise kann bei einer Änderung der Konfiguration der Roboterapplikation die Kontrollschnittstelle automatisch entsprechend modifiziert werden, um dem Bediener der Roboterapplikation stets eine an die aktuelle Konfiguration angepasste Kontrollschnittstelle zur Verfügung zu stellen. Zusätzlich oder alternativ kann bei einer Änderung der Konfiguration durch die Kontrollschnittstelle die abgespeicherte Konfiguration der Roboterapplikation automatisch entsprechend modifiziert werden, so dass der Bediener der Roboterapplikation deren Konfiguration über die Kontrollschnittstelle modifizieren kann. Beispielsweise kann der Bediener vor Ort eine Zusatzachse hinzufügen. In einer bevorzugten Ausführung der vorliegenden Erfindung wird entsprechend auch die bisherige Konfiguration der Roboterapplikation, die beispielsweise in einer SPS, Prozessplanung, -optimierung oder -steuerung hinterlegt ist, entsprechend verändert. Umgekehrt werden beispielsweise Ein- und/oder Ausgabemöglichkeiten für einen Roboter von der Kontrollschnittstelle entfernt, wenn der entsprechende Roboter aus der Konfiguration entfernt wird.

Vorzugsweise wird die Kontrollschnittstelle auf Basis von Bibliotheken generiert bzw. modifiziert, die Komponenten der Konfiguration zugeordnet sind. So kann beispielsweise eine Bibliothek, die Konfigurationsdaten für einen Roboter umfasst, auch Daten umfassen, die die entsprechende Generierung bzw. Modifikation einer oder verschiedener Kontrollschnittstellen definieren, wenn der Roboter einer Konfiguration hinzugefügt wird. Gleichermaßen kann eine erfindungsgemäße Vorrichtung die Kontrollschnittstelle auch auf Basis der in einer Bibliothek hinterlegten Konfigurationsdaten der Applikationskomponente generieren bzw. modifizieren, beispielsweise auf Basis einer in der Bibliothek hinterlegten Kinematik, Achsbeschränkungen und dergleichen. Bibliotheken können gleichermaßen auch prozessspezifisch sein und beispielsweise Daten zu einem Klebe- oder Schweißprozess umfassen. Ebenso können Kommunikationsmöglichkeiten mit Peripherigeräten, etwa Schnittstellen, Protokolle oder dergleichen berücksichtigt werden. In gleicher Weise kann zusätzlich oder alternativ auch die Roboterapplikation auf Basis von Bibliotheken konfiguriert werden.

In einer bevorzugten Ausführung wird auch die Roboterapplikation mittels einer graphischen Benutzerschnittstelle konfiguriert. Vorteilhafterweise kann so die Anwenderfreundlichkeit gesteigert werden, da nicht nur die Anlagenprogrammierung vereinfacht, sondern auch die Verständlichkeit der auf dieser Basis automatisch generierten bzw. modifizierten Kontrollschnittstelle verbessert werden kann.

Vorzugsweise weist eine Konfigurationseinrichtung zum Generieren, Speichern und/oder Modifizieren einer Konfiguration der Roboterapplikation und/oder eine Vorrichtung zum Generieren und/oder Modifizieren einer Kontrollschnittstelle eine WSYWYG ("What you see is what you get")-Funktionalität auf, indem Komponenten der Roboterapplikation, Prozesse bzw. Prozessschritte, Prozessgrößen und/oder Ein- und/oder Ausgabemöglichkeiten graphisch dargestellt bzw. simuliert werden und, beispielsweise mittels "drag&drop"-Funktionalität gehandhabt werden können. In einer bevorzugten Ausführung wird die automatisch generierte bzw. modifizierte Kontrollschnittstelle durch die Konfigurationseinrichtung graphisch visualisiert oder simuliert, um beispielsweise durch den Anlagenprogrammierer überprüft bzw. angepasst zu werden.

Gemäß einer bevorzugten Ausführung werden Ein- und/oder Ausgabemöglichkeiten für eine Applikationskomponente, insbesondere einen Roboter, prozessspezifisch generiert bzw. modifiziert. So können beispielsweise Ein- bzw. Ausgabemöglichkeiten für Kräfte oder Momente dann vorgesehen werden, wenn im Prozess eine Kraft- bzw. Momentenregelung konfiguriert wird.

Weitere Vorteile und Merkmale ergeben sich aus den Unteransprüchen und den Ausführungsbeispielen. Hierzu zeigt, teilweise schematisiert:
- Fig. 1:: einen Ausschnitt einer graphischen Eingabemöglichkeit einer Konfigurationseinrichtung einer Vorrichtung nach Fig. 2;
- Fig. 2:: eine Vorrichtung nach einer Ausführung der vorliegenden Erfindung;
- Fig. 3A:: einen Ausschnitt einer Kontrollschnittstelle der Vorrichtung nach Fig. 2; und
- Fig. 3B:: einen Ausschnitt einer weiteren Kontrollschnittstelle der Vorrichtung nach Fig. 2.

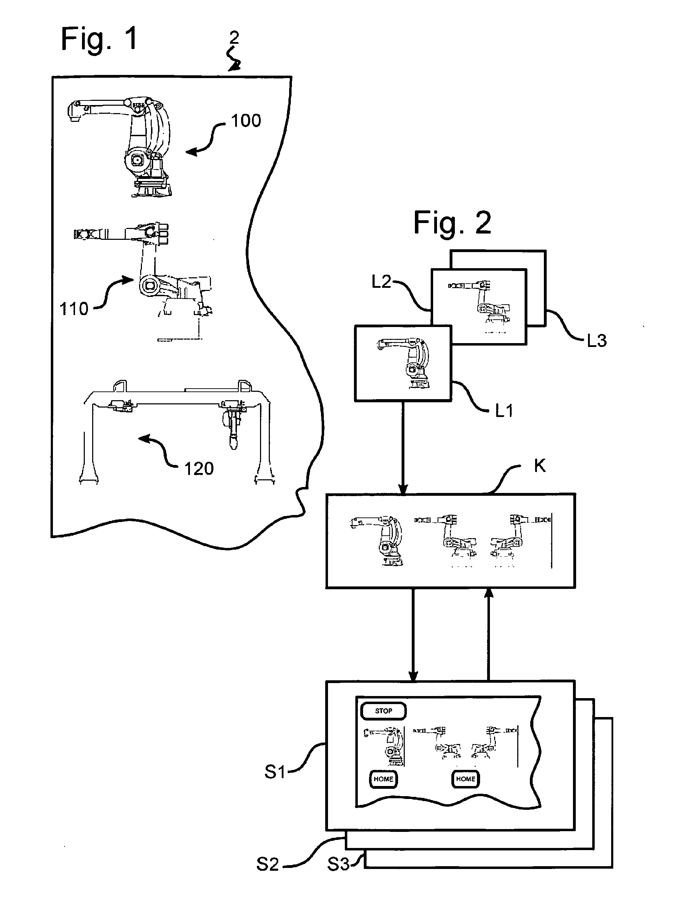

Fig. 1 zeigt einen Ausschnitt eines Bildschirms 2 einer Konfigurationseinrichtung K (vgl. Fig. 2) zum Generieren, Speichern und Modifizieren einer Konfiguration einer Roboterapplikation. Symbole 100 bis 120 zeigen verschiedenartige Roboter an, die ein Anlagenprogrammierer auswählen kann, um eine Roboterapplikation zu konfigurieren, beispielsweise eine Montagezelle einzurichten und einen in dieser ausgeführten Arbeitsprozess zu planen. Dem Programmierer stehen beispielsweise Palletierroboter 100, Sechsachsknickarmroboter 110 und Portalroboter 120 zur Verfügung. Per "drag&drop" zieht der Anwender die gewünschten Roboter in eine virtuelle Anlage und fügt sie so der Applikation hinzu. Bibliotheken L1,...,L3, die Parameter, Konfigurationsdaten und dergleichen für die jeweiligen Roboter enthalten, werden automatisch eingebunden (vgl. Fig. 2). In ähnlicher Weise kann der Anlagenprogrammierer den Prozess programmieren, indem er beispielsweise die ausgewählten Roboter mit virtuellen Werkzeugen verbinden. Sind deren Werkzeugbahnen geplant, kann die zugehörige Trajektorie des das Werkzeug führenden Roboters automatisch ermittelt werden.

Im Ausführungsbeispiel hat der Anlagenprogrammierer einen Palletier- und zwei Knickarmroboter ausgewählt und ihre Arbeitsprogramme konfiguriert. Diese Konfiguration der Roboterapplikation, i.e. Typ, Standort und Bewegungs- bzw. Aktionsablauf der Roboter, wird in der Konfigurationseinrichtung K gespeichert (vgl. Fig. 2).

Dann generiert die erfindungsgemäße Vorrichtung automatisch Kontrollschnittstellen S1,...,S3 für diese Roboterapplikation auf Basis ihrer Konfiguration (vgl. Fig. 2).

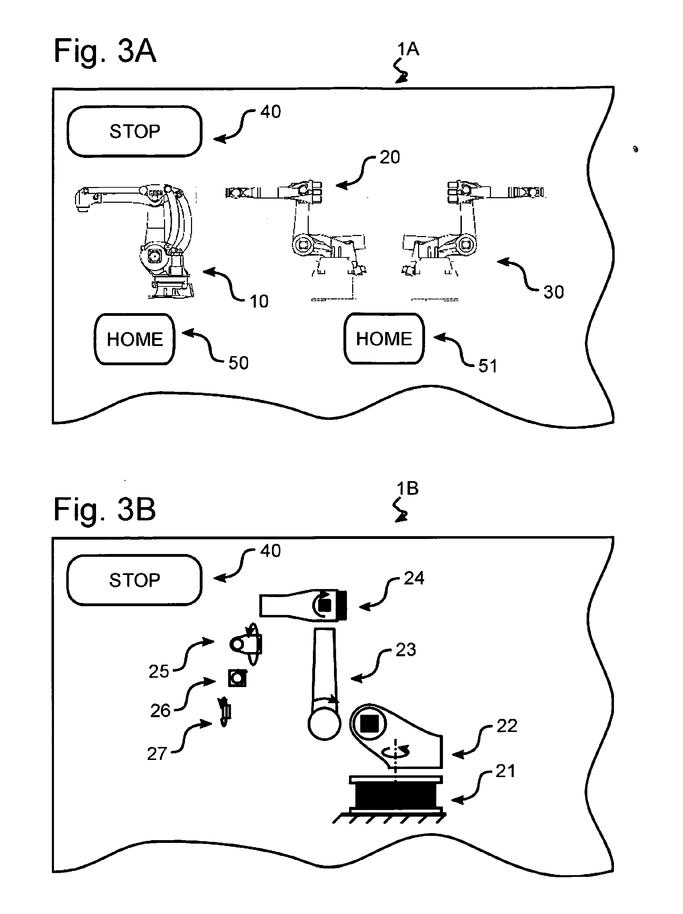

Exemplarisch zeigt hierzu Fig. 3A einen Ausschnitt einer Oberfläche 1A eines Touchscreens eines Anlagen- oder Roboterkontrollpanels, die eine

Kontrollschnittstelle S1 im Sinne der vorliegenden Erfindung darstellt. Auf der Oberfläche 1A werden die drei Roboter 10, 20, 30 der Roboterapplikation K angezeigt, die mittels der Kontrollschnittstelle kontrolliert werden können. Zusätzlich werden applikationskomponentenspezifische Kontrolleingabemöglichkeiten angezeigt. In Fig. 3A sind hierzu exemplarisch Touchscreen-Tasten 50, 51 dargestellt, die den Palletierroboter 10 bzw. die beiden kooperierenden Knickarmroboter 20, 30 gemeinsam jeweils in eine Home-Pose verfahren. Weiterhin umfasst der Touchscreen globale Kontrolleingabemöglichkeiten wie die in Fig. 3A dargestellte Nothalt-Touchscreen-Taste 40, die die gesamte Applikation stillsetzt.

Durch Antippen einer der Roboter-Touchscreen-Piktogramme 10,...30 kann der Bediener ein roboterspezifisches Untermenü aufrufen, zu dem ihm eine weitere Kontrollschnittstelle S2 im Sinne der vorliegenden Erfindung in Form einer entsprechenden Oberfläche 1 B des Anlagen- bzw. Roboterkontrollhandgerätes zur Verfügung gestellt wird. Auf diesem sind weiterhin globale Kontrolleingabemöglichkeiten wie die Nothalt-Taste 40 und nunmehr für den ausgewählten Roboter 20 spezifische Ein- und/oder Ausgabemöglichkeiten vorgesehen, beispielsweise symbolische Eingabemöglichkeiten für die sechs Bewegungsachsen 21,...27 des Roboters, die der Bediener durch Antippen auswählen und dann mittels einer weiteren Untermenü-Bildschirmoberfläche oder Touchscreen-Tasten der Oberfläche 1 B (nicht dargestellt) einzeln verfahren kann, um zum Beispiel zum Teachen mit dem Roboter 20 durch Einzel-Achsbewegungen eine Pose anzufahren.

Die einzelnen Oberflächen 1A, 1 B stellen somit Kontrollschnittstellen S1, S2 im Sinne der vorliegenden Erfindung zum Bedienen der vorab geplanten Konfiguration K bzw. zu deren Überwachung dar. Gleichermaßen kann auch das Kontrollpanel selber, das die einzelnen Oberflächen 1A, 1 B realisieren kann, als Kontrollschnittstelle S3 im Sinne der vorliegenden Erfindung bezeichnet werden.

Diese Kontrollschnittstelle(n) werden, wie in Fig. 2 durch den Vertikalpfeil nach unten angedeutet, auf Basis der vom Anlagenplaner vorab geplanten Konfiguration K der Roboterapplikation automatisch generiert bzw. modifiziert. Hierzu wird zunächst eine Standart-Kontrollschnittstelle zugrunde gelegt, die bereits globale Kontrolleingabemöglichkeiten wie die Nothalt-Taste 40 aufweist. Entsprechend der in der Applikation vorhandenen Komponenten, im Ausführungsbeispiel der Roboter 10,...30, werden entsprechende Ein- und/oder Ausgabemöglichkeiten hinzugefügt, etwa der Oberfläche 1A die Roboterpiktogramme 10,...30 und die Verfahr-Tasten 50, 51, der Oberfläche 1 B die einzelnen Achsen 21,...27 des Roboters 20. Dabei wird auf Bibliotheken L1,...L3 zurückgegriffen, die Konfigurationsdaten, etwa die Kinematik des Roboters 20, umfassen, um beispielsweise die Verfahrbereiche für dessen Achsen 21,...27 darzustellen. Auch die Vorgabe einer gemeinsamen Verfahr-Taste 51 für die beiden kooperierenden Roboter 20, 30 wird automatisch auf Basis der geplanten Applikation generiert, da in dieser die Kooperation der beiden Roboter definiert ist.

In nicht dargestellter Weise können auch prozessspezifische Daten, insbesondere prozessspezifische Bibliotheken bei der Generierung bzw. Modifikation von Kontrollschnittstellen berücksichtigt werden. Führt der Roboter 10 beispielsweise einen Klebe- oder Schweißprozess aus, kann hierzu bei der Konfiguration ein entsprechendes Technologiepaket in Form einer Prozessbibliothek eingebunden werden, auf deren Basis Ein- und/oder Ausgabemöglichkeiten auf den Oberflächen 1A, 1 B vorgesehen bzw. modifiziert werden, etwa eine Möglichkeit zum Starten oder Beenden eines Klebeauftrags oder zur Eingabe eines Schweißstromes und einer Schweißdauer.

Der Bediener kann mittels der Kontrollschnittstelle vor Ort die Konfiguration ändern. Beispielsweise kann er einem Roboter der Applikation eine zusätzliche Achse, beispielsweise Werkzeug- oder Portalachse hinzufügen oder einzelne Achsen sperren, indem er die graphischen Eingabemöglichkeiten der Kontrollschnittstelle nutzt (nicht dargestellt). Dann wird diese Änderung der Konfiguration K von der Kontrollschnittstelle auf die Konfiguration K, wie sie beispielsweise in einer Anlagensteuerung oder Prozessplanung hinterlegt ist, zurückgespiegelt, wie in Fig. 2 durch den vertikalen Aufwärtspfeil angedeutet.

Auf diese Weise werden Konfiguration K und Kontrollschnittstelle(n) S1,...S3 stets konsistent gehalten. Durch die automatische Generierung bzw. Modifikation der Kontrollschnittstelle(n) werden zudem auf für den Anlagenprogrammierer einfache und intuitiv zu bedienende Weise für den Bediener eine oder mehrere Kontrollschnittstellen zur Verfügung gestellt, die optimal an die jeweilige Applikation angepasst sind. Insbesondere wird die Gefahr reduziert, dass für eine Applikationskomponente, beispielsweise einen Roboter der Anlage, keine adäquaten Ein-/Ausgabemöglichkeiten in der Kontrollschnittstelle vorgesehen sind, der Bediener beispielsweise aufgrund eines entsprechenden Fehlers des Anlagenprogrammierers bei der Gestaltung der Kontrollschnittstelle keine Möglichkeit zum gezielten Stillsetzen eines Roboters vorfindet.

### Bezugszeichenliste

- 1A, 1 B: Oberfläche eines Kontrollpanels (Kontrollschnittstelle)
- 2: Oberfläche einer Konfigurationseinrichtung
- 10, 20, 30: Roboter(symbol)
- 21,...27: Roboterachse(nsymbol)
- 40: Nothalt-Taste (globale Eingabemöglichkeit)
- 50, 51: HOME-Verfahrtaste (spezifische Eingabemöglichkeit)
- 100,...120: Robotertyp(symbol)
- K: Konfiguration der Roboterapplikation
- L1,...L3: Bibliothek zu einer Applikationskomponente
- S1,...S3: Kontrollschnittstelle

## Patentansprüche

1. Verfahren zum Kontrollieren einer Roboterapplikation, mit den Schritten:
Konfigurieren der Roboterapplikation; und
Kontrollieren der Roboterapplikation mittels einer Kontrollschnittstelle (S1, S2, S3),
**dadurch gekennzeichnet, dass**
die Kontrollschnittstelle automatisch auf Basis der Konfiguration (K) der Roboterapplikation generiert und/oder modifiziert wird.

2. Verfahren nach Anspruch 1, **dadurch gekennzeichnet, dass** bei einer Änderung der Konfiguration (K) der Roboterapplikation die Kontrollschnittstelle (S1, S2, S3) automatisch entsprechend modifiziert wird.

3. Verfahren nach einem der vorhergehenden Ansprüche, **dadurch gekennzeichnet, dass** bei einer Änderung durch die Kontrollschnittstelle (S1, S2, S3) eine abgespeicherte Konfiguration (K) der Roboterapplikation automatisch entsprechend modifiziert wird.

4. Verfahren nach einem der vorhergehenden Ansprüche, **dadurch gekennzeichnet, dass** die Roboterapplikation und/oder die Kontrollschnittstelle mittels einer graphischen Benutzerschnittstelle konfiguriert wird.

5. Verfahren nach einem der vorhergehenden Ansprüche, **dadurch gekennzeichnet, dass** wenigstens eine von der Roboterapplikation und der Kontrollschnittstelle auf Basis von Bibliotheken (L1, L2, L3) konfiguriert, generiert und/oder modifiziert wird.

6. Vorrichtung zum Kontrollieren einer Roboterapplikation, mit:
einer Konfigurationseinrichtung (K) zum Generieren, Speichern und/oder Modifizieren einer Konfiguration der Roboterapplikation; und
einer Kontrollschnittstelle (S1, S2, S3) zum Kontrollieren der Roboterapplikation,
**dadurch gekennzeichnet, dass**
die Vorrichtung zur Durchführung eines Verfahrens nach einem der vorhergehenden Ansprüche eingerichtet ist.

7. Vorrichtung nach Anspruch 6, **dadurch gekennzeichnet, dass** die Konfigurationseinrichtung und/oder die Kontrollschnittstelle eine visuelle Ein- und/oder Ausgabeeinrichtung (S1, S2, S3) umfasst.

8. Vorrichtung nach einem der vorhergehenden Ansprüche 6 bis 7, **dadurch gekennzeichnet, dass** die Kontrollschnittstelle (S1, S2, S3) portabel ausgebildet ist.

9. Computerprogramm, das ein Verfahren nach einem der Ansprüche 1 bis 5 ausführt, wenn es in einer Vorrichtung nach einem der vorhergehenden Ansprüche 6 bis 8 abläuft.

10. Computerprogrammprodukt mit Programmcode, der auf einem maschinenlesbaren Träger gespeichert ist und ein Computerprogramm nach Anspruch 9 umfasst.
